# EUROPEAN PATENT SPECIFICATION

(11) **EP 2 256 650 B1**
(45) Date of publication and mention of the grant of the patent: **30.10.2013**
(21) Application number: 10002883.6
(22) Date of filing: 18.03.2010
(51) Int. Cl.: G06F 17/30, G06K 9/22, G06K 9/00

(54) **Mobile terminal and method for displaying on a mobile terminal**
Tragbares Endgerät und Verfahren zur Anzeige auf einem tragbaren Endgerät
Terminal mobile et procédé d'affichage sur un terminal mobile

(30) Priority: 28.05.2009 KR 20090046828; 28.05.2009 KR 20090046904
(43) Date of publication of application: 01.12.2010
(73) Proprietor: LG ELECTRONICS INC., Yeongdeungpo-gu Seoul 150-721 (KR)
(72) Inventor: Lee, Min, Ho, Seoul 153-801 (KR); Lee, Ho, Joon, Seoul 153-801 (KR)
(74) Representative: Gunzelmann, Rainer

(56) References cited:
- EP-A1- 1 965 344
- WO-A1-2008/107976
- DE-A1-102006 000 556
- US-A1- 2009 237 546

## Description

### 1. Field

Embodiments of the present disclosure may relate to a method for displaying on a mobile terminal.

### 2. Background

Terminals may be classified as mobile/portable terminals and stationary terminals. The mobile terminals may be further classified as handheld terminals and vehicle mount terminals based on possibility of user's direct portability.

The mobile terminal may be implemented as a multimedia player provided with composite functions such as photographing of photos or moving pictures, playback of music or moving picture files, game play, broadcast reception and the like, for example.

To support and increase the mobile terminal functions, improvement of structural parts and/or software parts of the mobile terminal may be provided.

A camera may be provided in the mobile terminal. The mobile terminal may have a camera function, a camcorder function, and/or a video call function.

EP 1 965 344 A1 may be construed to disclose a method and a mobile terminal according to the preambles of the independent claims.

WO 2008/107976 A1 may be construed to disclose an image reproduction device whereby image content and at least one menu image are acquired from an AV device via a communication network and reproduced on a monitor screen, whereby arrangement information concerning a plurality of menu selection branches in said menu image is stored for each menu image. The image reproduction device also identifies the in-reproduction menu image being reproduced, decides on one of the menu selection branches from among the plurality of selection branches in the in-reproduction menu image in accordance with the pointing information for the monitor image, and generates a menu selection signal in accordance with the first menu selection branch which is supplied to said AV device via said communication network.

### 3. Summary

There are provided a mobile terminal and a method according to the independent claims. Developments are set forth in the respective dependent claims.

### BRIEF DESCRIPTION OF THE DRAWINGS

Arrangements and embodiments may be described in detail with reference to the following drawings in which like reference numerals refer to like elements and wherein:
FIG. 1 is a block diagram of a mobile terminal according to one example embodiment.
FIG. 2A is a front-view of a mobile terminal according to an example embodiment;
FIG. 2B is a perspective diagram of a backside of the mobile terminal shown in FIG. 2A;
FIG. 3 is a flow chart for explaining a method for displaying in a mobile terminal according to a first example embodiment of the present invention;
FIG. 4 is an image diagram for explaining a first implementation of a method for displaying in the mobile terminal according to the first example embodiment;
FIG. 5 is an image diagram for explaining a second implementation of a method for displaying according to the first example embodiment;
FIG. 6 is an image diagram for explaining a third implementation of a method for displaying according to the first example embodiment;
FIG. 7 is an image diagram for explaining a fourth implementation of a method for displaying according to the first example embodiment;
FIG. 8 is an image diagram for explaining a fifth implementation of a method for displaying according to the first example embodiment;
FIG. 9 is a flow chart for explaining a modification of a method for displaying according to the first example embodiment;
FIG. 10 is a flow chart of a method for controlling a mobile terminal according to a second example embodiment of the present invention;
FIG. 11 and FIG. 12 schematically illustrate an atmosphere where a method for controlling a mobile terminal is applied according to the second example embodiment; and
FIG. 13 to FIG. 18 illustrate image diagrams of a display screen where a method for controlling a mobile terminal is applied according to the second example embodiment.

### DETAILED DESCRIPTION

Reference may now be made in detail to arrangements and embodiments of the present disclosure, examples of which may be illustrated in the accompanying drawings. Same reference numbers may be used throughout the drawings to refer to the same or like parts. Suffixes 'module' and 'unit' for elements used in the following description may be given or used in common for ease of description, but may have meanings or roles discriminated from each other.

Mobile terminals may include a mobile phone, a smart phone, a laptop computer, a digital broadcast terminal, a personal digital assistant (PDA), a portable multimedia player (PMP), a navigation system and/or the like.

The present disclosure may also be applicable to other apparatus, such a stationary terminal as a digital TV, a desktop computer and/or the like.

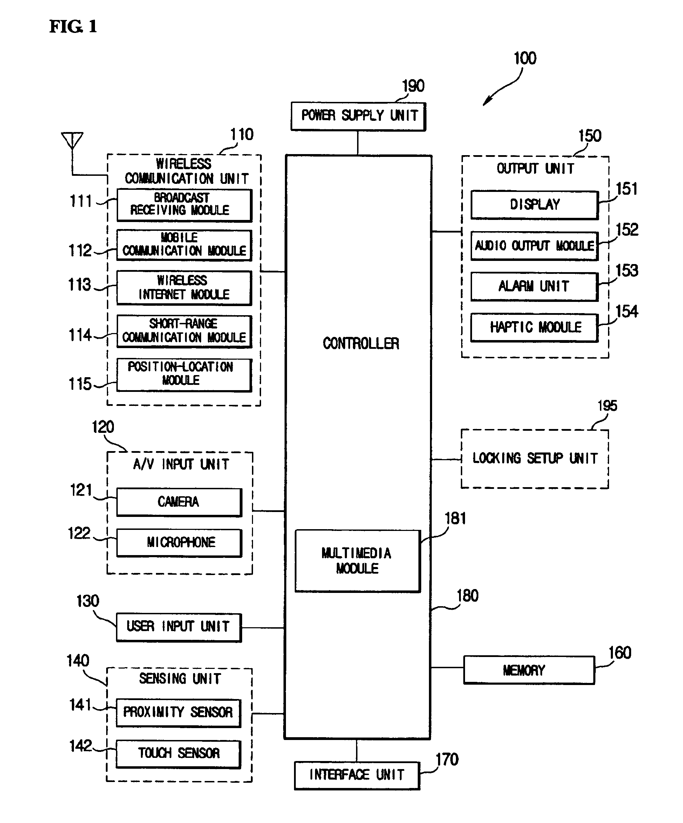

FIG. 1 is a block diagram of a mobile terminal according to one example embodiment. Other embodiments, arrangements and configurations may also be provided.

As shown in FIG. 1, a mobile terminal 100 may include a wireless communication unit 110, an A/V (audio/video) input unit 120, a user input unit 130, a sensing unit 140, an output unit 150, a memory 160, an interface unit 170, a controller 180, a power supply unit 190, a locking set-up unit 195 and the like. FIG. 1 shows the mobile terminal 100 having various components, although all the illustrated components are not a requirement. Greater or fewer components may alternatively be implemented.

The wireless communication unit 110 may include one or more components that permit wireless communication between the mobile terminal 100 and a wireless communication system or network within which the mobile terminal 100 is located. For example, the wireless communication unit 110 may include a broadcast receiving module 111, a mobile communication module 112, a wireless Internet module 113, a short-range communication module 114, a position-location module 115 and/or the like.

The broadcast receiving module 111 may receive a broadcast signal and/or broadcast associated information from an external broadcast managing server via a broadcast channel.

The broadcast channel may include a satellite channel and a terrestrial channel.

The broadcast managing server may refer to a server that generates and transmits a broadcast signal and/or broadcast associated information or a server that is provided with a previously generated broadcast signal and/or broadcast associated information and then transmits the provided signal or information to a terminal. The broadcast signal may be implemented as a TV broadcast signal, a radio broadcast signal, and a data broadcast signal, for example. The broadcast signal may further include a broadcast signal combined with a TV or radio broadcast signal.

The broadcast associated information may include information associated with a broadcast channel, a broadcast program, a broadcast service provider, etc. The broadcast associated information can be provided via a mobile communication network. The broadcast associated information may be received by the mobile communication module 112.

The broadcast associated information may be implemented in various forms. For example, broadcast associated information may include an electronic program guide (EPG) of digital multimedia broadcasting (DMB) and an electronic service guide (ESG) of digital video broadcast-handheld (DVB-H).

The broadcast receiving module 111 may receive broadcast signals transmitted from various types of broadcast systems. For example, such broadcasting systems may include digital multimedia broadcasting-terrestrial (DMB-T), digital multimedia broadcasting-satellite (DMB-S), digital video broadcast-handheld (DVB-H), the data broadcasting system known as media forward link only (MediaFLO®) and integrated services digital broadcast-terrestrial (ISDB-T). The broadcast receiving module 111 can be suitably configured for other broadcasting systems as well as the above-explained digital broadcasting systems.

The broadcast signal and/or broadcast associated information received by the broadcast receiving module 111 may be stored in a suitable device, such as the memory 160.

The mobile communication module 112 transmits/receives wireless signals to/from one or more network entities (e.g., base station, external terminal, server, etc.). Such wireless signals may represent audio, video, and data signals according to text/multimedia message transceivings, among others.

The wireless Internet module 113 supports Internet access for the mobile terminal 100. This module may be internally or externally coupled to the mobile terminal 100. In this case, the wireless Internet technology can include WLAN (Wireless LAN) (Wi-Fi), Wibro (Wireless broadband), Wimax (World Interoperability for Microwave Access), HSDPA (High Speed Downlink Packet Access), etc.

The short-range communication module 114 may facilitate relatively short-range communications. Suitable technologies for implementing this module include radio frequency identification (RFID), infrared data association (IrDA), ultra-wideband (UWB), as well as the networking technologies commonly referred to as Bluetooth and ZigBee, to name a few.

The position-location module 115 may identify or otherwise obtain the location or position of the mobile terminal 100. This module may be implemented with a global positioning system (GPS) module.

The audio/video (A/V) input unit 120 may provide audio or video signal inputs to the mobile terminal 100. The AN input unit 120 may include a camera 121 and a microphone 122. The camera 121 may receive and process image frames of still pictures or video that are obtained by an image sensor in a video call mode or a photographing mode. The processed image frames may be displayed on the display 151.

The image frames processed by the camera 121 may be stored in the memory 160 or may be externally transmitted via the wireless communication unit 110. At least two cameras 121 may be provided to the mobile terminal 100 based on environment of usage.

The microphone 122 may receive an external audio signal while the mobile terminal 100 is in a particular mode, such as phone call mode, a recording mode and/or a voice recognition mode. The audio signal may be processed and converted into electric audio data. The processed audio data may be transformed into a format transmittable to a mobile communication base station via the mobile communication module 112 in case of a call mode. The microphone 122 may include noise removing algorithms (or noise canceling algorithms) to remove or reduce noise generated in the course of receiving the external audio signal.

The user input unit 130 may generate input data responsive to user manipulation of an associated input device or devices. Examples of such devices may include a keypad, a dome switch, a touchpad (e.g., static pressure/capacitance), a jog wheel, a jog switch, etc.

The sensing unit 140 may provide sensing signals for controlling operations of the mobile terminal 100 using status measurements of various aspects of the mobile terminal 100. For example, the sensing unit 140 may detect an open/close status of the mobile terminal 100, relative positioning of components (e.g., a display and a keypad) of the mobile terminal 100, a position change of the mobile terminal 100 or a component of the mobile terminal 100, a presence or an absence of user contact with the mobile terminal 100, orientation or acceleration/deceleration of the mobile terminal 100. As an example, the mobile terminal 100 may be configured as a slide-type mobile terminal. The sensing unit 140 may sense whether a sliding portion of the mobile terminal 100 is open or closed. Other examples include the sensing unit 140 sensing presence or absence of power provided by the power supply 190, presence or absence of a coupling or other connection between the interface unit 170 and an external device. The sensing unit 140 may include a proximity sensor 141 and a touch sensor 142.

The output unit 150 may generate outputs relevant to senses of sight, hearing, touch and the like. The output unit 150 may include the display 151, an audio output module 152, an alarm 153 and a haptic module 154.

The display 151 may visually display (i.e., output) information associated with the mobile terminal 100. For example, if the mobile terminal 100 is operated in a phone call mode, the display 151 may provide a user interface (UI) or a graphical user interface (GUI) that includes information associated with placing, conducting, and/or terminating a phone call. If the mobile terminal 100 is in a video call mode or a photographing mode, the display 151 may additionally or alternatively display images that are associated with these modes, the UI or the GUI.

The display 151 may be implemented using known display technologies including, for example, a liquid crystal display (LCD), a thin film transistor-liquid crystal display (TFT-LCD), an organic light-emitting diode display (OLED), a flexible display and a three-dimensional (3-D) display. The mobile terminal 100 may include one or more of such displays.

Some of the displays may be implemented in a transparent or optical transmittive type that can be called a transparent display. A transparent OLED (or TOLED) may be an example of the transparent display. The display 151 may also be implemented as the optical transmittive type. In this configuration, a user may see an object in rear of a terminal body via an area occupied by the display 151 of the terminal body.

At least two displays 151 may be provided on the mobile terminal 100 based on the configuration of the mobile terminal 100. For example, a plurality of displays may be arranged on a single face of the mobile terminal 100 by being spaced apart from each other or by being built in one body. A plurality of displays may be arranged on different faces of the mobile terminal 100.

In a case that the display 151 and the touch sensor 141 for detecting a touch action are configured in a mutual layer structure (hereafter called a touch screen), the display 151 may be used as an input device as well as an output device. The touch sensor 142 may be configured as a touch film, a touch sheet, a touchpad and/or the like.

The touch sensor 142 may convert a pressure applied to a specific portion of the display 151 or a variation of a capacitance generated from a specific portion of the display 151 to an electric input signal. The touch sensor 142 may detect a pressure of a touch as well as a touched position or size. A separate pressure sensor may detect pressure of the touch.

If a touch input is provided to the touch sensor 142, signal(s) corresponding to the touch may be transferred to a touch controller. The touch controller may process the signal(s) and then transfer the processed signal(s) to the controller 180. The controller 180 may determine whether a prescribed portion of the display 151 is touched.

The proximity sensor 141 may be provided to an internal area of the mobile terminal 100 enclosed by the touch screen and/or around the touch screen. The proximity sensor 141 may detect a presence or non-presence of an object approaching a prescribed detecting surface or an object existing around the proximity sensor 141 using an electromagnetic field strength or infrared ray without mechanical contact. The proximity sensor 141 may have longer durability than a contact type sensor and may also have a wider utility than the contact type sensor.

The proximity sensor 141 may include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and the like. If the touch screen includes the electrostatic capacity proximity sensor, the proximity of a pointer may be detected using a variation of electric field according to proximity of the pointer. The touch screen (i.e., touch sensor) may be classified as the proximity sensor 141.

In the following description, an action that a pointer approaches without contacting the touch screen may be called a proximity touch. An action that a pointer actually touches the touch screen may be called a contact touch. The meaning of the position on the touch screen proximity-touched by the pointer may define a position of the pointer that vertically opposes the touch screen when the pointer performs the proximity touch.

The proximity sensor 141 may detect a proximity touch and a proximity touch pattern (e.g., a proximity touch distance, a proximity touch duration, a proximity touch position, a proximity touch shift state, etc.). Information corresponding to the detected proximity touch action and the detected proximity touch pattern may be outputted to the touch screen.

The audio output module 152 may function in various modes including a call-receiving mode, a call-placing mode, a recording mode, a voice recognition mode, a broadcast reception mode and/or the like to output audio data that is received from the wireless communication unit 110 or is stored in the memory 160. During operation, the audio output module 152 may output an audio signal relating to a particular function (e.g., a call received, a message received, etc.). The audio output module 152 may be implemented using one or more speakers, buzzers, other audio producing devices, and/or combinations thereof.

The alarm 153 may output a signal for announcing an occurrence of a particular event associated with the mobile terminal 100. Events may include a call received event, a message received event and a touch input received event. The alarm 153 may output a signal for announcing the event occurrence by way of vibration as well as video or audio signal. The video or audio signal may be outputted via the display 151 or the audio output unit 152. The display 151 or the audio output module 152 may be regarded as a part of the alarm 153.

The haptic module 154 may generate various tactile effects that can be sensed by a user. Vibration may be a representative one of the tactile effects generated by the haptic module 154. Strength and pattern of the vibration generated by the haptic module 154 may be controllable. For example, different vibrations may be outputted by being combined (or synthesized) together or may be outputted in sequence.

The haptic module 154 may generate various tactile effects as well as vibrations. For example, the haptic module 154 may generate an effect attributed to the arrangement of pins vertically moving against a contact skin surface, an effect attributed to injection/suction power of air through an injection/suction hole, an effect attributed to a skim over a skin surface, an effect attributed to a contact with an electrode, an effect attributed to an electrostatic force, an effect attributed to representation of warm/cold sense using an endothermic or exothermic device and/or the like.

The haptic module 154 may enable a user to sense a tactile effect through a muscle sense of a finger, an arm or the like as well as to transfer the tactile effect through a direct contact. At least two haptic modules 154 may be provided on the mobile terminal 100 based on a corresponding configuration type of the mobile terminal 100.

The memory 160 may store programs for operating the controller 180. The memory 160 may temporarily store input/output data such as phonebook data, message data, still image, and/or moving image. Data for various patterns of vibration and/or sound outputted in case of a touch input to the touch screen may be stored in the memory 160.

The memory 160 may be implemented using any type or combination of suitable volatile and non-volatile memories or storage devices including a hard disk, a random access memory (RAM), a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk, a multimedia card micro type memory, a card-type memory (e.g., SD memory, XD memory, etc.) and/or other similar memory or data storage device. The mobile terminal 100 may operate in association with a web storage for performing a storage function of the memory 160 on the Internet.

The interface unit 170 may couple the mobile terminal 100 with external devices. The interface unit 170 may receive data from the external devices or may be supplied with power and then transfer the data or power to respective elements of the mobile terminal 100 or enable data within the mobile terminal 100 to be transferred to the external devices. The interface unit 170 may be configured using a wired/wireless headset port, an external charger port, a wired/wireless data port, a memory card port, a port for coupling to a device having an identity module, audio input/output ports, video input/output ports, an earphone port and/or the like.

The identity module may be a chip for storing various kinds of information for authenticating a use authority of the mobile terminal 100 and may include a User Identify Module (UIM), a Subscriber Identify Module (SIM), a Universal Subscriber Identity Module (USIM) and/or the like. A device having an identity module (hereafter called an identity device) may be manufactured as a smart card. The identity device may be connectible to the mobile terminal 100 via a relevant port.

When the mobile terminal 110 is connected to an external cradle, the interface unit 170 may become a passage for supplying the mobile terminal 100 with power from the cradle or a passage for delivering various command signals inputted from the cradle by a user to the mobile terminal 100. Each of the various command signals inputted from the cradle or the power may operate as a signal enabling the mobile terminal 100 to recognize if it is correctly loaded in the cradle.

The controller 180 may control overall operations of the mobile terminal 100. For example, the controller 180 may perform control and processing associated with voice calls, data communications, video calls, etc. The controller 180 may include a multimedia module 181 that provides multimedia playback. The multimedia module 181 may be configured as part of the controller 180, or may be implemented as a separate component. The controller 180 may have a time counting function.

The controller 180 may perform a pattern recognizing process for recognizing a writing input or a picture drawing input carried out on the touch screen as characters or images, respectively.

The power supply unit 190 may provide a power required by various components of the mobile terminal 100. The power may be internal power, external power, and/or a combination thereof.

Embodiments may be implemented in a computer-readable medium using, for example, computer software, hardware, and/or some combination thereof. For hardware implementation, embodiments may be implemented using one or more applications of specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform functions described herein, and/or a selective combination thereof. Embodiments may also be implemented by the controller 180.

For software implementation, embodiments may be implemented with separate software modules, such as procedures and functions, each of which may perform one or more of the functions and operations described herein. The software codes may be implemented with a software application written in any suitable programming language and may be stored in the memory 160, and executed by a controller or a processor, such as the controller 180.

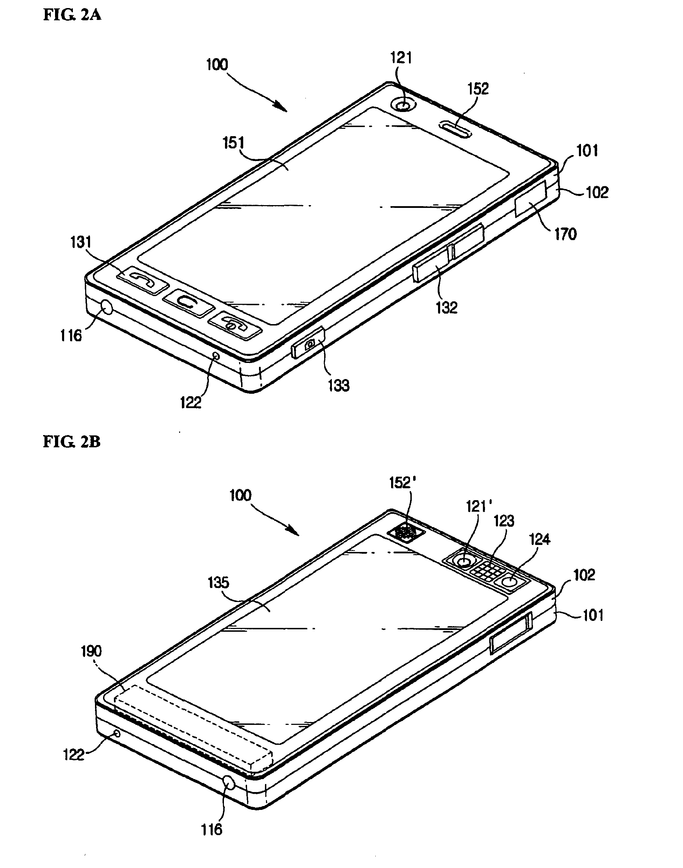

FIG. 2A is a front-view of a mobile terminal according to an example embodiment. Other embodiments, arrangements and configurations may also be provided.

As shown in FIG. 2A, the mobile terminal 100 may have a bar type terminal body. Embodiments of the mobile terminal may be implemented in a variety of other configurations. Examples of such configurations may include a folder-type, a slide-type, a bar-type, a rotational-type, a swing-type and/or combinations thereof.

The body may include a case (e.g. a casing, a housing, a cover, etc.) that form an exterior of the terminal. The case may be divided into a front case 101 and a rear case 102. Various electric/electronic parts may be provided in a space between the front case 101 and the rear case 102. A middle case (or intermediate case) may be further provided between the front case 101 and the rear case 102.

The cases may be formed by injection molding of synthetic resin or may be formed of a metal substance such as stainless steel (STS), titanium (Ti) and/or the like, for example.

The display 151, the audio output unit 152, the camera 121, the user input unit 130 (including first and second manipulation units 131, 132), the microphone 122, the interface unit 170 and the like may be provided on the terminal body, and more particularly may be provided on the front case 101.

The display 151 may occupy most of a main face of the front case 101. The audio output module 152 and the camera 121 may be provided at an area adjacent to one end portion of the display 151, while the first manipulation unit 131 and the microphone 122 may be provided at another area adjacent to the other end portion of the display 151. The second manipulation unit 132 and the interface unit 170 may be provided on lateral sides of the front and rear cases 101 and 102.

The user input unit 130 may receive a command for controlling an operation of the mobile terminal 100. The user input unit 130 may include the first and second manipulating units 131 and 132. The first and second manipulating units 131 and 132 may be called a manipulating portion and may adopt any mechanism of a tactile manner that enables a user to perform a manipulation action by experiencing a tactile feeling.

Content inputted by the first manipulating unit 131 or the second manipulating unit 132 may be diversely set. For example, a command such as a start, an end, a scroll and/or the like may be inputted to the first manipulating unit 131. A command for a volume adjustment of sound outputted from the audio output unit 152, a command for a switching to a touch recognizing mode of the display 151 and/or the like may be inputted to the second manipulating unit 132.

FIG. 2B is a perspective diagram of a backside of the mobile terminal shown in FIG. 2A. Other embodiments, arrangements and configurations may also be provided.

As shown in FIG. 2B, a camera 121' may be additionally provided on a backside of the terminal body, and more particularly on the rear case 102. The camera 121' may have a photographing direction that is substantially opposite to a photographing direction of the camera 121 and may have pixels differing from pixels of the camera 121.

For example, the camera 121 may have a lower number of pixels to capture and transmit a picture of a user face for a video call, while the camera 121' may have a greater number of pixels for capturing a general subject for photography without transmitting the captured subject. Each of the cameras 121 and 121' may be provided on the terminal body to be rotated and/or popped up.

A flash 123 and a mirror 124 may be additionally provided adjacent to the camera 121'. The flash 123 may project light toward a subject in case of photographing the subject using the camera 121'. If a user attempts to take a picture of the user (i.e., self-photography) using the camera 121', the mirror 124 may enable the user to view a user face reflected by the mirror 124.

An additional audio output unit 152' may be provided on a backside of the terminal body. The additional audio output unit 152' may implement a stereo function together with the audio output unit 152 and may be used for implementation of a speakerphone mode in talking over the mobile terminal 100.

A broadcast signal receiving antenna 124 may be additionally provided at the lateral side of the terminal body as well as an antenna for communication or the like. The antenna 124 may be considered as a portion of the broadcast receiving module 111 and/or may be retractably provided on the terminal body.

The power supply unit 190 for supplying a power to the mobile terminal 100 may be provided with respect to the terminal body. The power supply unit 190 may be built within the terminal body. Alternatively, the power supply unit 190 may be detachably connected to the terminal body.

FIG. 2B also shows a touchpad 135 for detecting a touch that is additionally provided on the rear case 102. The touchpad 135 may be configured as a light transmittive type. If the display 151 outputs visual information from both faces, the display 151 may also recognize visual information via the touchpad 135. The information outputted from both of the faces may be controlled by the touchpad 135. Alternatively, a display may be further provided to the touchpad 135 so that a touchscreen may also be provided on the rear case 102.

The touchpad 135 may be activated by interconnecting with the display 151 of the front case 101. The touchpad 135 may be provided in rear of the display 151 and in parallel to one another. The touchpad 135 may have a size equal to or less than a size of the display 151.

An augment reality program as described herein may be identified from a virtual reality in that additional information is shown in the real world. The augment reality program may mean a program related to the augment real world. The following description may relate to obtaining information of a manual that includes obtaining information from a repair guide or a repair manual.

First Embodiment

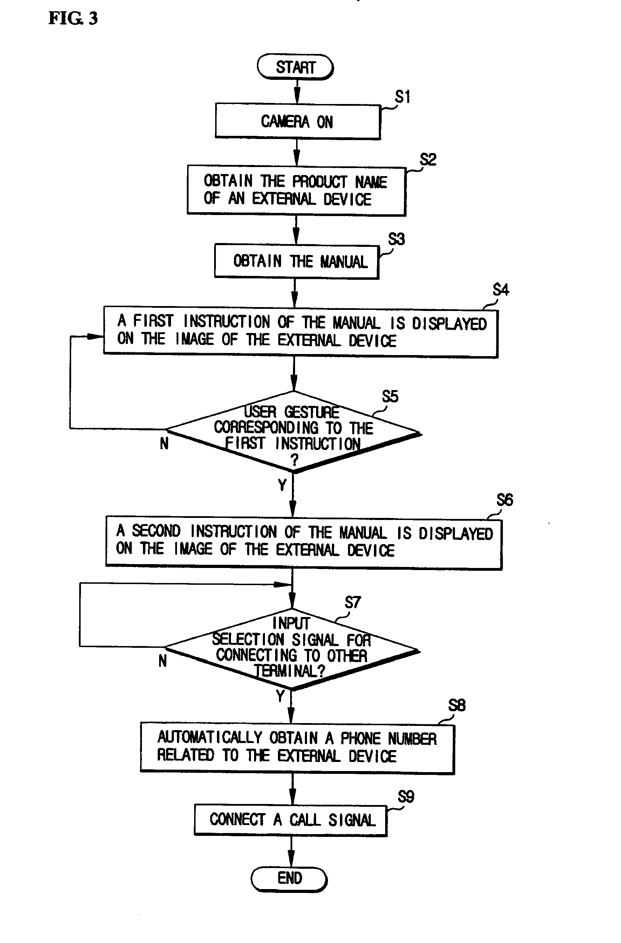

FIG. 3 is a flow chart for explaining a method for displaying a manual in a mobile terminal in accordance with a first example embodiment of the present invention. Other embodiments, operations and orders of operations may also be within the scope of the present invention.

As shown in FIG. 3, a user may turn on the camera 121 provided on the mobile terminal 100 in operation S1. The operation of turning on the camera 121 may be done through a menu for operating the camera 121. A product name of an external device may be obtained from an image received from the camera 121 in operation S2. The memory 160 may store information of a characteristic shape of various electric devices. The controller 180 may obtain the product name of the external device that is included in the image obtained from the camera 121 by using the information of an external shape of various electric devices. Alternatively, a serial number of the product may be inputted. A device for identifying some code, such as a bar-code, may be used for obtaining the product name of the external device.

If the controller 180 determines that the memory 160 does not have corresponding information on the external device (i.e., the information does not exist in the memory 160), the controller 180 may activate a module within the wireless communication unit 110 to obtain the product name from an external server such as an Internet server. The information may be obtained through a wireless connection. Information on the external device may be obtained by using the product name in operation S3. The manual information may be previously stored in the memory 160. The manual (or repair guide) may be downloaded through the Internet by activating a module within the wireless communication unit 110 and/or by using the obtained product name. The manual may be manually stored in an external storage medium such as a desk-top computer and/or a personal computer.

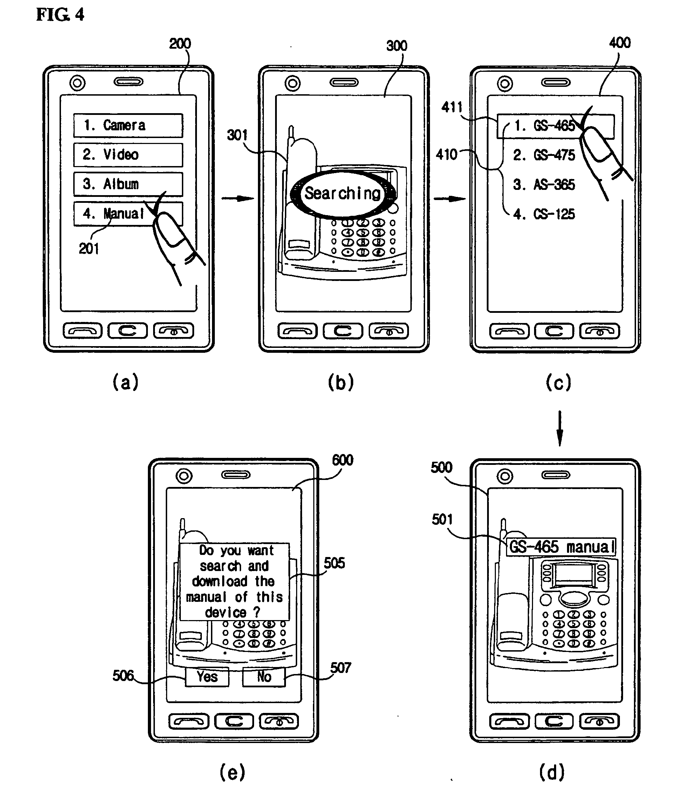

An augment reality program stored in the memory 160 may be driven to display a first instruction of the manual (or repair guide) within the image where the external device is displayed in operation S4. If a user gesture corresponding to the first instruction is detected in operation S5, a second instruction of the manual may be displayed on the image of the external device in operation S6. The user gesture may be a real gesture made with respect to the first instruction. The user gesture may be detected by the camera 121. The user gesture may also be a touch on a specific position of the touch screen. The user gesture may further be a specific voice that is previously set up. The user gesture may be a change of the camera's focus to the specific position. Specific embodiments may be explained with reference to FIG. 4 to FIG. 8.

If the user needs help from another person or the user has questions on the displayed manual (or displayed repair guide) that uses the augment reality program, the user may generate a selection signal for connecting to another terminal. The selection signal may be generated by selecting a dedicated key. The selection signal may be generated from the menu in a state that the augment real image on the manual is displayed. If the selection signal is for connecting to another terminal, a phone number related to the product (i.e., the external device) may be automatically obtained by the controller 180. The phone number may be a phone number of the product company or may be a phone number of aftersales service (AS) center. If this phone number is stored in the memory 160, the controller 180 may search the memory 160 to obtain the phone number. If the phone number is not stored in the memory 160 (i.e., does not exist in the memory 160), the controller 180 may activate the wireless communication unit 110 to obtain the phone number through the Internet. The controller 180 may transmit a call signal to the phone number for a voice call, a video call, and/or a short message.

The user may check the user manual and/or the repair guide by the augmented reality. The user may more easily execute use or repair of the product.

The user may easily ask a question on a usage method or a repair method of the product to the AS center.

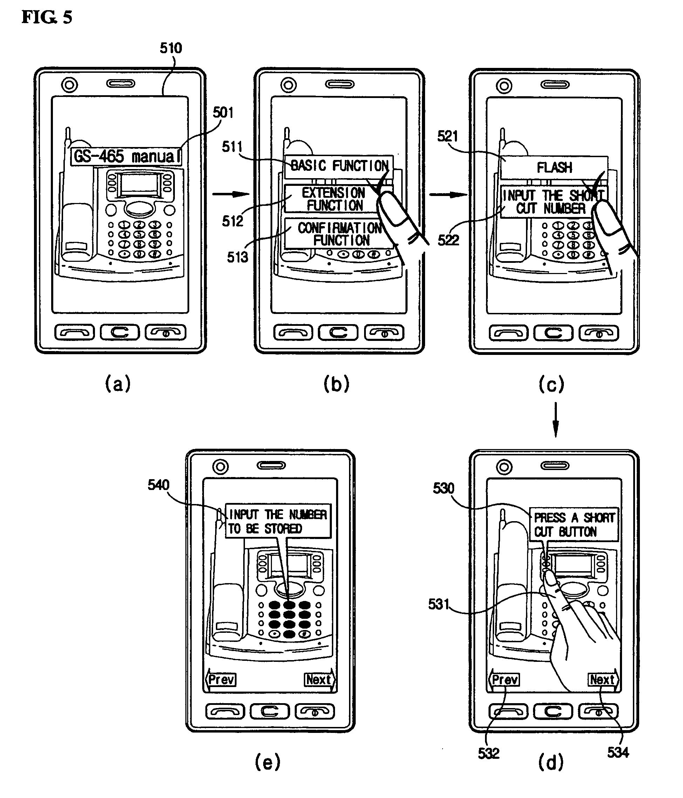

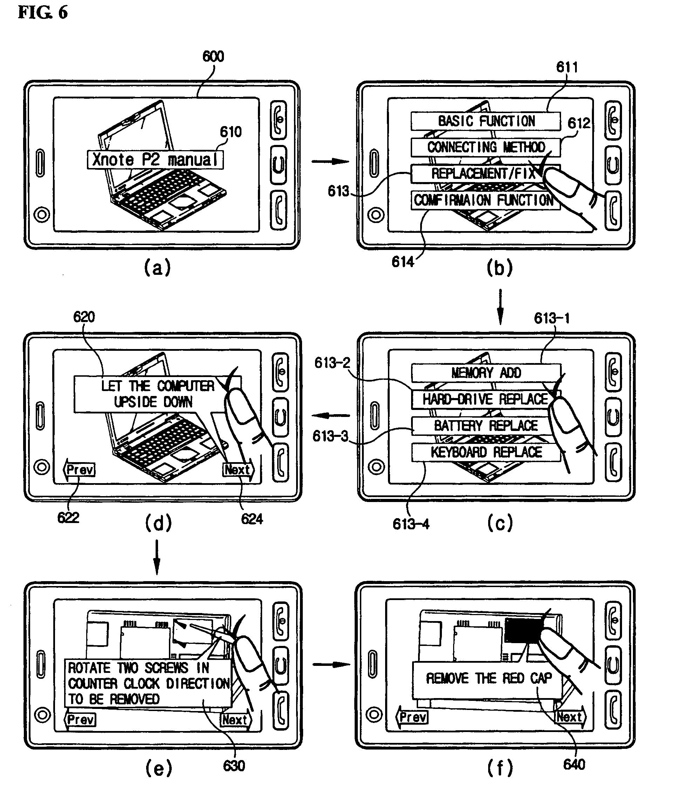

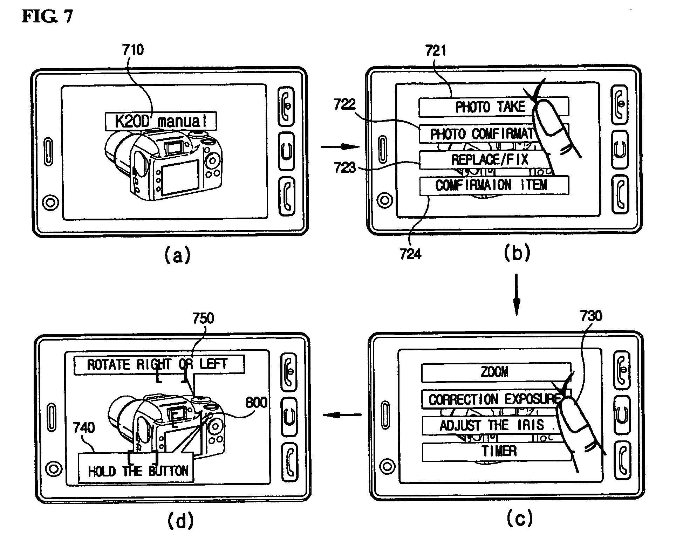

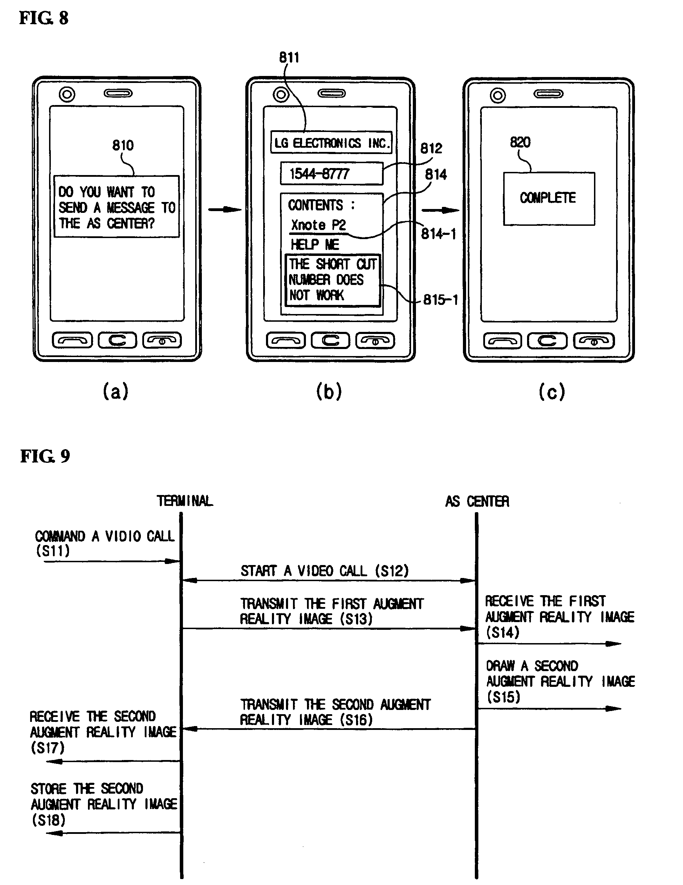

FIG. 4 is an image diagram for explaining a first implementation of a method for displaying according to the first example embodiment. FIG. 5 is an image diagram for explaining a second implementation of a method for displaying according to the first example embodiment. FIG. 6 is an image diagram for explaining a third implementation of a method for displaying according to the first example embodiment. FIG. 7 is an image diagram for explaining a fifth implementation of a method for displaying according to the first example embodiment. FIG. 8 is an image diagram for explaining a sixth implementation of a method for displaying according to the first example embodiment.

First Implementation of First Example Embodiment

FIG. 4 is an image diagram for explaining a first implementation of a method according to the first example embodiment. FIG. 4(a) shows a multimedia screen 200. If a manual icon 201 (or repair guide icon) is selected, the camera 121 provided in the mobile terminal 100 may obtain an image of the external device 301 (i.e., a preview image). The image may be considered a captured image. The controller 180 may use information on a shape or a characteristic portion of various electronic devices that are stored in the memory 160 to obtain a product name of the external device. If a plurality of product names are obtained, a candidate list 410 of the external device included in the captured image may be displayed on the display 151, as shown in FIG. 4(c). Reference number 400 may be a screen where the candidate list 410 is displayed. If the user selects a product icon 411 in the candidate list 410 by using the user input unit 130, a manual icon 501 (or repair guide icon) may be displayed on a screen 500 of the display 151 as shown in FIG. 4(d). If a manual (or repair guide) of the product is not stored in the memory 160, a download request message 505 may be displayed on a screen 600 of the display 151 as shown in FIG. 4(e). A 'yes' icon 506 and 'no' icon 507 may be additionally displayed on the display 151. If the user select the 'yes' icon 506, the controller 180 may activate a module within the wireless communication unit 110 to transmit information on an outer shape and/or a characteristic portion of the external device. The server may use the information to search for the manual (or repair guide) of the external device. The controller 180 may download the manual information (or repair guide information) that is not previously stored in the memory 160.

Operations described in FIG. 5 may be selective operations. That is, the operation of FIG. 4(d) may be entered without displaying the candidate list 410.

In the first implementation of the first example embodiment, a product name of the external device may be obtained by an outer shape obtained from the camera 121. The method may use a bar code, and the method of inputting the product name through the input unit 130 may be applied.

Second Implementation of First Example Embodiment

FIG. 5 is an image diagram for explaining a second implementation of a method for displaying according to the first example embodiment. The user's manual may be applied in the second implementation. FIG. 5(a) shows a screen 510 where the manual icon 501 is displayed. FIG. 5(a) may be a same screen as FIG. 4(d). If the user selects the manual icon 501, then major classification icons 511, 512, 513 may be displayed on the display 151, as shown in FIG. 5(b). The major classification icons 511 - 513 may be semi transparently overlaid. The major classification icons may include a basic function icon 511, an extension function icon 512 and a confirmation icon 513. If the confirmation icon 513 is selected, a medium classification icon of the extension function icon 512 may be displayed. The medium classification icon may include a flash icon 521 and a short cut number input icon 522, as shown in FIG. 5(c). If the short cut number input icon 522 is selected, the user may press a button that the first instruction message 530 indicates as the user sees the augmented image as shown in FIG. 5(d). A 'prev' icon 532 and a 'next' icon 532 may be additionally displayed. If the 'prev' icon 532 is selected, operation may return to the previous operation. If the 'next' icon 534 is selected, operation may move to a next operation. If the user presses the real button that corresponds to the first instruction message 530, the controller 180 may detect a user gesture 531, and then the controller 180 may use the augment reality program to display a second instruction image 540 on a position where the behavior should happen, as shown in FIG. 5(e).

The user may understand a user's manual of the external device through the augment reality program. Therefore, the user may easily execute a desired function.

Third Implementation of First Example Embodiment

FIG. 6 is an image diagram for explaining a third implementation of a method for displaying according to the first example embodiment. FIG. 6 illustrates an implementation where a repair guide (or repair manual) of the external device is explained.

FIG. 6(a) illustrate a screen where a manual icon (i.e., a computer manual) 610 is displayed on a screen 600. If the user selects the manual icon 610, then major classification icons 611, 612, 613, 614 may be displayed on the display 151. The major classification icons 611-614 may be semi-transparently overlaid. The major classification icon may include a basic function icon 611, a connecting method icon 612, a replacement/fix icon 613 and a confirmation function icon 614. If the replacement/fix icon 613 is selected, a medium classification icon of the replacement/fix icon 613 may be displayed. The medium classification icon may include a memory add icon 613-1, a hard-drive replace icon 613-2, a battery replace icon 613-3 and a keyboard replace icon 613-4, as shown in FIG. 6(c). If the hard-drive replace icon 613-2 is selected, a user may do an action that a first instruction message 620 is displayed as the user sees the augment image. A 'prev' icon 622 and a 'next' icon 624 may be additionally displayed, as shown in FIG. 6(d). If the 'prev' icon 622 is selected, operation may return to the previous operation. If the 'next' icon 624 is selected, the operation may move to the next operation. If the user completes the action of the displayed first instruction message 620, then the user may then select the first instruction message 620. If the display is a touch screen and if the first instruction message 620 is touched (including proximity touched), then a second instruction message 630 may be displayed, as shown in FIG 6(e) at a position set forth in the second instruction message 630 should occur. If the action of the second instruction message 630 is completed, then the user may select the second instruction message 630 by touch. If the second instruction message 630 is touched (including proximity touch), then a third instruction message 640 may be displayed, as shown in FIG. 6(f) at a position where the action set forth in the third instruction message 640 should occur.

A specific voice may be used as a user gesture for informing to complete the action that the message indicates.

Accordingly, a mobile terminal 100 may be provided that includes a camera 121 to capture an image, a memory 160 to store the captured image, a wireless communication unit 110 to wirelessly communicate with an external server, and a controller 180 to determine an object in the captured image and to determine whether a repair guide exists in the memory 160 of the mobile terminal 100. Additionally, when the repair guide is determined to not exist in the memory 160, the controller 180 may obtain the repair guide from the external server and store the obtained repair guide in the memory 160. A display 151 may display information of the repair guide stored in the memory 160. In response to a user selection from the displayed information, the controller 180 may display a first instruction, such as the first instruction message 620. The controller 180 may display a second instruction (such as the second instruction message 630) of the repair guide when a user touches the display 151 at an area that corresponds to the displayed first instruction or touches the display 151 at a previously identified area. The first instruction may be displayed to correspond to a displayed specific part of the object in the captured image. Additionally, the displayed specific part of the object may be a part to repair of the object.

Fourth Implementation of First Example Embodiment

FIG. 7 is an image diagram for explaining a fourth implementation of a method according to the first example embodiment. In the fourth implementation, a frame for focusing the camera may be used in movement of the manual.

FIG. 7A illustrates a screen that displays a manual icon 710 (i.e., a digital camera manual). If the user selects the manual icon 710, then major classification icons 721, 722, 723, 724 may be displayed by being semi-transparently overlaid. The major classification icons may include a photo take icon 721, a photo confirmation icon 722, a replace/fix icon 723 and a confirmation item icon 724. If the photo take icon 721 is selected, the medium classification icons that include a zoom icon, an exposure correction icon, an iris adjustment icon and a timer photo icon may be displayed, as shown in FIG. 7(c). If the exposure correction icon is selected, the user may see an augment reality image that includes a first instruction message 740 and a second instruction message 750 to provide instructions for a user. If a predetermined time lapses after the user provides a frame for focus to the first instruction message 740, and then a frame for focus is provided on the second instruction message 750 for a predetermined time, the controller 180 may determine that the user gesture is completed as shown in FIG. 7(d). After that, a third instruction message (not shown) may be displayed with the image obtained from the camera.

The user may easily understand contents of a user manual (or repair guide) of the external device through an augment reality program. Further, the user may easily operate a desired fixation or repair.

Fifth Implementation of First Example Embodiment

FIG. 8 is an image diagram for explaining a fifth implementation of a method according to the first example embodiment. In the fifth implementation, the user may receive external help.

Even though the augment reality program provides a convenient explanation for a user manual (or repair guide) of the external device, if the user has a question on the manual, the user may select a dedicated key (e.g. a call key) or use a menu tree to get a phone number related to the external device. The user may then send an SMS message to the phone number. Certain information may be automatically provided in the message by the controller 180.

In FIG. 4 to FIG. 7, if the user selects the dedicated key for sending a SMS message or the user uses a menu tree for sending the SMS message, a message 810 of "Do you want to send a message to the AS center?" may be displayed on the display 151, as shown in FIG. 8(a). If the user inputs an enter key, a SMS message frame screen may be displayed on the display 151, as shown in FIG. 8(b). The phone number of the AS center may be obtained from the product name that is confirmed. The contents of the SMS message may be fulfilled by confirming a manual state in that the dedicated key is selected. As shown in FIG 8(b), a name of the receiver 811, a phone number of the receiver 812, and contents 814 may be automatically provided by the controller 180. At this time, a product name 814-1, problems 815-1 of the current operation and so on may be automatically inputted by the controller. If the user generates a selection signal for sending the SMS message, the SMS sending confirmation message 820 may be displayed on the display 151, as shown in FIG. 8(c).

Accordingly, the controller 180 may obtain an identifier of an external source based on a user input to contact the external source. The controller 180 may also automatically provide information regarding the object in a message to the external source. The automatically provided information may include the name 811, the phone number 812, contents 814, product name 814-1, and problems 815-1.

The user may also attempt a voice call or a video call by using the phone number obtained through the product name.

An example of a video call may be explained with reference to FIG. 9.

Modification of First Embodiment

FIG. 9 is a flow chart for explaining a modification of a method according to the first example embodiment. Other embodiments, operations and orders of operations may also be within the scope of the present invention.

As shown in FIG. 9, the user may command a video call in operation S11. The controller 180 may activate a module within the wireless communication unit 110 to transmit a call signal for video call to the AS center. If the AS center allows the call, the video call may start in operation S12. The controller 180 may create a first augment reality image by using the image captured from the camera 121 (or the mobile terminal 100) and a manual data (or repair guide data) and an augment reality program that are stored in the memory 160. The first augment reality image may be transmitted to the terminal of the AS center in operation S 13. The terminal of the AS center may receive the first augment reality image in operation S14. The user of the terminal of the AS center may create a second augment reality image by using the first augment reality image in operation S15. The second reality image may be transmitted to the terminal in operation S16. The user of the terminal may receive the second augment reality image from the AS center in operation S 17 and store the second augment reality image in the memory 160 in operation S 18.

The user of the terminal may receive the augment reality image from the AS center of the external device. Therefore, the user may receive useful help on a difficult question regarding the manual (or repair guide).

This modification may provide help to the user by calling the AS center. However, the embodiments are not limited to this description.

On the other hand, the terminal may transmit a position of the portion of the external device (i.e., an object) that may be a problem, and the manual information of this operation. The AS center may receive the image of the external device, position information of the external device, and manual information. The AS center may figure out a user's problems by receiving this information.

The AS center may transmit an image of the external device, a help message and/or a position information of the object. The controller 180 of the terminal may display an image that combines information on the display 151. Accordingly, the user may understand a help message more accurately.

The AS center may be used as an example, although other embodiments may also be provided.

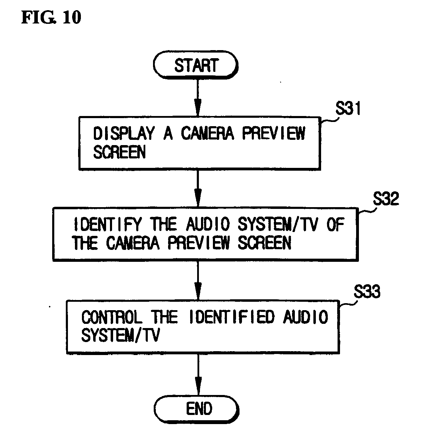

A second embodiment of the present invention may now be explained with reference to FIG. 10 to FIG. 18.

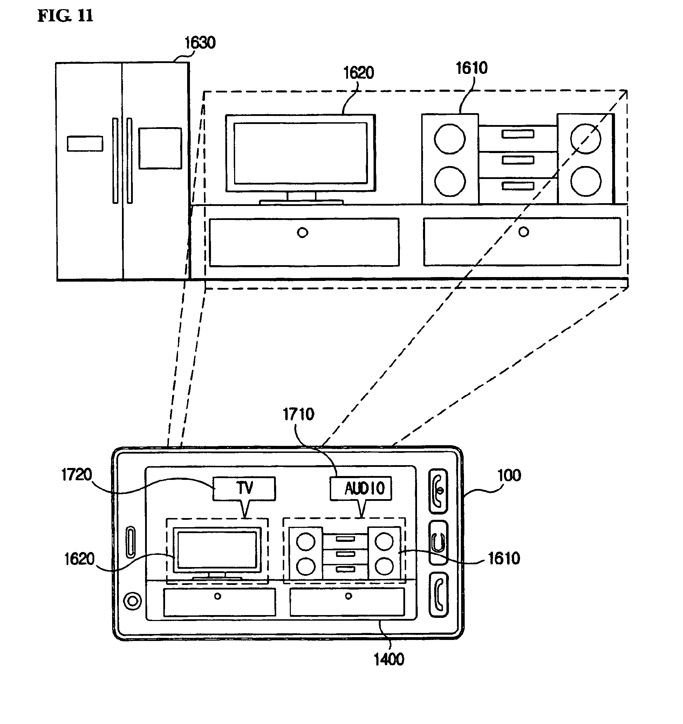

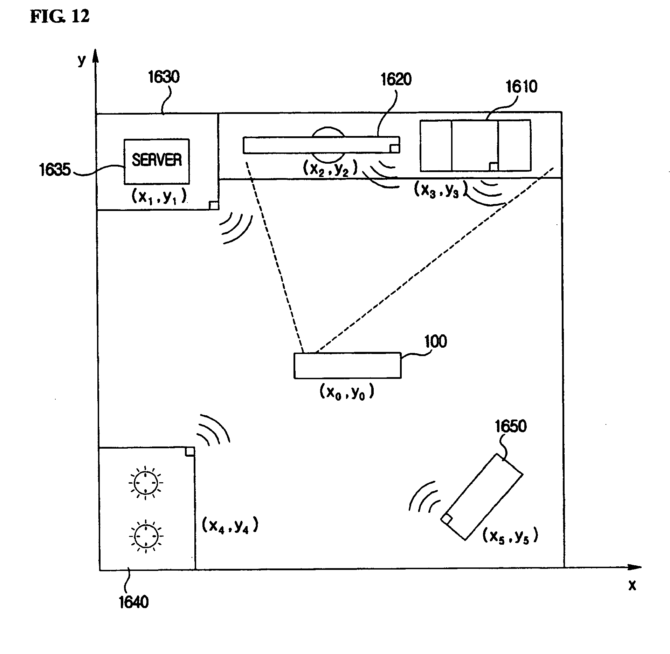

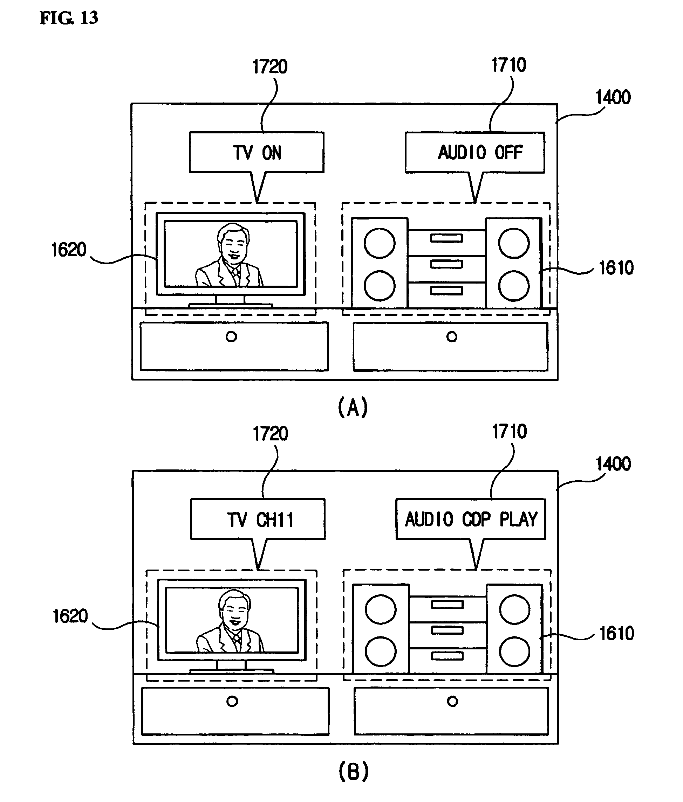

FIG. 10 is a flow chart of a method for controlling a mobile terminal according to a second example embodiment of the present invention. Other embodiments, operations and orders of operations may also be provided. FIG. 11 and FIG. 12 schematically illustrate an atmosphere where a method for controlling a mobile terminal is applied. FIGs. 13-18 illustrate image diagrams of a display screen where a method for controlling the mobile terminal is applied.

As shown in FIG. 10, a camera preview image may be displayed in operation S31, the audio system TV of the camera preview screen may be identified in operation S32 and the identified audio system/TV may be controlled in operation S32.

As shown in FIG. 11, the mobile terminal may photograph electronic devices 1610, 1620, 1630 around the mobile terminal by activating the camera 121 based on proper operation of the user input unit 130. For ease of illustration, the operation for activating the camera 121 may not be further described.

At least one of the electronic devices (shown as elements 1610, 1620, 1630) may be a device that enables wireless communication with the mobile terminal 100 through the wireless communication unit 110 of the mobile terminal 100. As one example, the electronic devices (shown as elements 1610, 1620, 1630) may communicate with the mobile terminal 100 with a short range communication system.

The camera preview image on the electronic devices 1610, 1620 photographed by the camera 121 in the electronic device 1610, 1620, 1630 may be displayed on the touch screen of the mobile terminal in operation S31. The electronic devices of the preview screen may include an audio system 1610 and a TV 1620, respectively.

The controller 180 may identify in operation S32, the audio system 1610 and the TV 1620 of the preview screen.

The controller 180 may display the audio identification indicator 1710 and the TV identification indicator 1720 on touch screen 1400. The audio identification indicator 1710 and the TV identification indicator 1720 may respectively correspond to the audio system 1610 and the TV 1620. The audio system identification indicator 1710 and the TV identification indicator 1720 may be displayed on the touch screen 1400 as an augment reality graphic.

The identified audio system 1610 and the identified TV 1620 may be controlled by the touch screen 1400 of the mobile terminal 100 in operation S33.

The method for identifying the electronic devices and the method for controlling the electronic devices may now be explained in more detail.

1. Identification of the Electronic Device

1) Use of Shape Recognition

The controller 180 of the mobile terminal 100 may recognize a shape of the audio system and the TV on a camera preview screen.

The controller 180 may then compare a result of the shape recognition on the audio system 1610 and the TV 1610 with the electronic device recorded in the electronic device data in the memory 160. The controller 180 may use an electronic device database of an external server by accessing the external server having the electronic device database. If the controller 180 uses the electronic database of the external server, the memory 160 may not need to store the electronic device database.

The controller 180 may identify the audio system 1610 and the TV 1620 as a result of the comparison.

On the other hand, in order to more easily identify the electronic device, an identifier, such as bar-code, may be attached to the electronic device.

The controller 180 may identify the electronic device by recognizing an identifier attached to the electronic device in the camera preview screen.

2. Use of Position Information of the Electronic Device.

Position information of the electronic devices and position information and direction information of the mobile terminal 100 may be compared to identify the electronic device that is displayed in the camera preview screen.

A degree of the zoom may be considered in the comparison.

FIG. 12 illustrates a view where various electronic devices (i.e., the audio system 1610, the TV 1620, the refrigerator 1630, a range 1640, and an air conditioner 1650) are provided indoor.

Each position information ((x₁, y₁), (x₂, y₂), (x₃, y₃), (x₄, y₄), (x₅, y₅)) of the electronic device that is provided indoor may correspond to the electronic devices previously stored in the memory 160 of the mobile terminal 100. Therefore, the mobile terminal 100 may know where the electronic devices are located indoors.

Each position information of the electronic devices may not need to be stored in the memory 160. For example, each position information of the electronic devices may be previously stored in the external server, and the mobile terminal 100 may access the external server to get each position information of the electronic devices.

The external server 1635 may be provided in an always-power- on electronic device such as the refrigerator 1630. The external server 1635 may also be independently provided.

The controller 180 may know that the mobile terminal 100 is provided indoor based on the position-location module 115.

The controller 180 may obtain more accurate position of the mobile terminal 100 by using a strength of the wireless communication signal between the mobile terminal 100 and the electronic devices 1610, 1620, 1630, 1640, 1650.

More particularly, the mobile terminal 100 may obtain positions of the electronic devices 1610, 1620, 1630, 1640, 1650. Therefore, if the electronic devices 1610, 1620, 1630, 1640, 1650 would output signals for wireless communication, the controller 180 may determine the strength of the each wireless communication signal from each electronic device to decide the distance between the mobile terminal 100 and each electronic device.

Therefore, the controller 180 may know a indoor position of the mobile terminal 100 by considering distance from each electronic device based on position of each electronic device.

The position of the mobile terminal 100 may be obtained by the position-location module 115.

The mobile terminal 100 may obtain a direction of the camera 121 by using a position sensor of the sensing unit 140.

The position sensor may not be necessary if the direction that the mobile terminal faces is included in the position information obtainable from the position information module.

The controller 180 may obtain the position information of the mobile terminal 100 by using the indoors position of the mobile terminal 100 and the direction that the camera faces.

Therefore, the controller 180 may compare the position information of each electronic device and the position information of the mobile terminal 100 to predict and identify the electronic devices to be displayed on the camera preview screen.

1. Control of Electronic Device.

The identification indicator of the electronic device may now be explained with reference to FIG. 13.

As shown in FIG. 13, the audio system 1610 and the TV 1620 may be displayed on the touch screen 1400.

The controller 180 may identify the audio system 1610 and the TV 1620.

In addition, the controller 180 may display the audio identification indicator 1710 and the TV identification indicator 1720 on the touch screen 1400. The audio identification indicator 1710 and the TV identification indicator 1720 may correspond to the audio system 1610 and the TV 1620, respectively.

As shown in FIG. 13(A) and FIG. 13(B), the audio identification indicator 1710 and the TV identification indicator 1720 may include additional information such as operation status of corresponding electronic devices.

FIG. 13(A) shows that the audio identification indicator 1710 and the TV identification indicator 1720 include a status that the corresponding electronic device turns on or turns off.

FIG. 13(B) shows that the audio identification indicator 1710 and the TV identification indicator 1720 includes information identifying operation of the corresponding electronic device does.

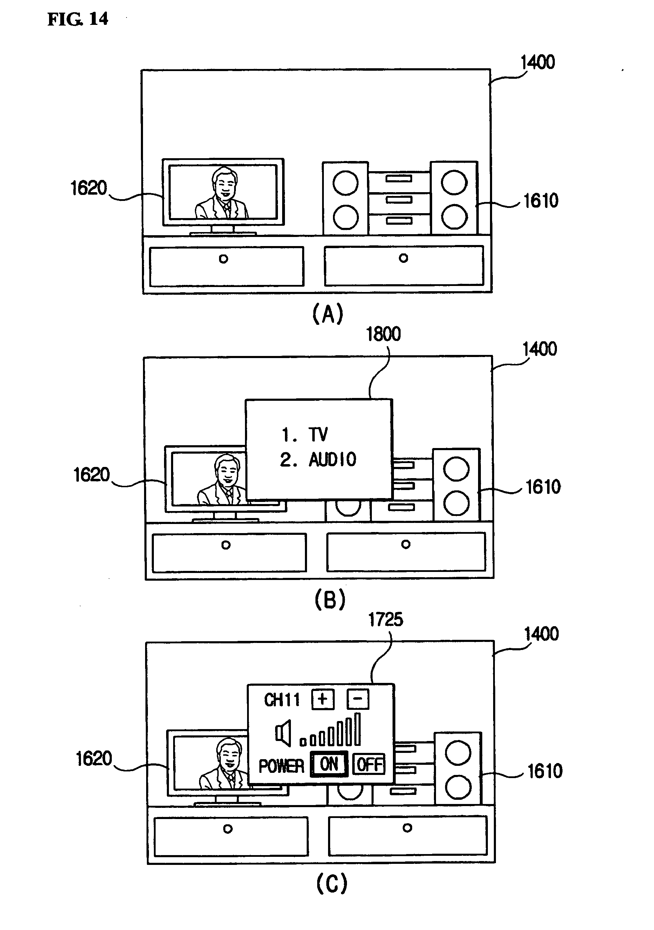

A method for controlling the identified electronic device may now be explained with reference to FIG. 14.

As shown in FIG. 14, the camera preview screen may be displayed on the touch screen 1400 of the mobile terminal 100.

The camera preview screen may include the audio system 1610 and the TV 1620.

If the user command is inputted through the user input unit 130, the electronic devices displayed on the preview screen, such as the audio system 1610 and the TV 1620, may be identified. As shown in FIG. 14(B), a list 1800 of the identified electronic devices may be displayed on the touch screen 1400.

One item of the list, such as TV 1620, may be selected by using the user input unit 130.

As shown in FIG. 14(C), a menu window 1725 for controlling the selected electronic device 1620 may be displayed on the touch screen 1400. If the selected electronic device is off, a command for turning on the electronic device may be transmitted to the electronic device through the wireless communication (e.g., short range communication) when the menu window 1725 is displayed. Alternatively, the menu window 1725 may not be displayed though the electronic device is selected during the off.

The electronic devices may be ubiquterized so that the each IP address is allotted. The selected electronic device 1620 may be controlled by means of the Internet through the wireless Internet module 113.

The controller 180 may display the menu window 1725 through short range communication from the selected electronic device (such as the TV 1620). The controller 180 may also display the menu window 1725 based on the electronic device database stored in the memory 160.

Therefore, the user of the mobile terminal 100 may control the electronic devices by manipulating the menu window 1725 such as by change of a channel and adjustment of volume.

The control command inputted from the menu window 1725 may be transmitted to the electronic device through the wireless communication system.

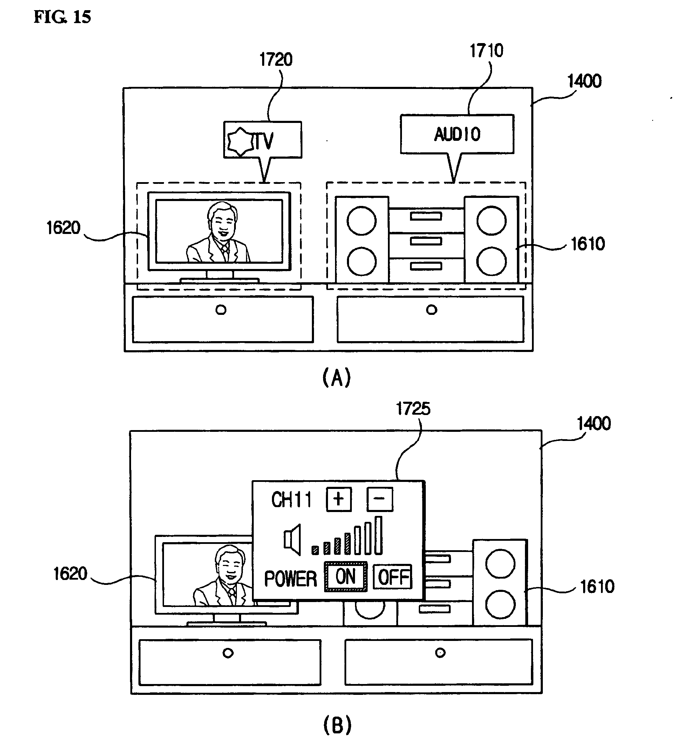

In the following description, another embodiment where the identified electronic device is controlled may be explained with reference to FIG. 15.

As shown in FIG. 15(A), the camera preview screen may be displayed on the touch screen 1400. The controller 180 may identify the electronic devices (such as the audio system 1610 and the TV 1620) in the preview screen and display the audio system identification indicator 1710 and the TV identification indicator 1720 on the touch screen 1400. The audio system identification indicator 1710 and the TV identification indicator 1720 may correspond to the audio system 1610 and the TV 1620.

The identification indicator of one electronic device (e.g., the TV 1620) in the identified electronic devices may be touched and selected.

As shown in FIG. 15, the menu window 1725 for controlling the selected electronic device 1620 on the touch screen 1400 may be displayed.

The user of the mobile terminal 100 may control the selected electronic device 1620 by manipulating the menu window 1725, for example, a change of the channel, and/or an adjustment of the volume. The control command is inputted through the menu window 1725 may be transmitted to the electronic devices through the wireless communication such as short range communication.

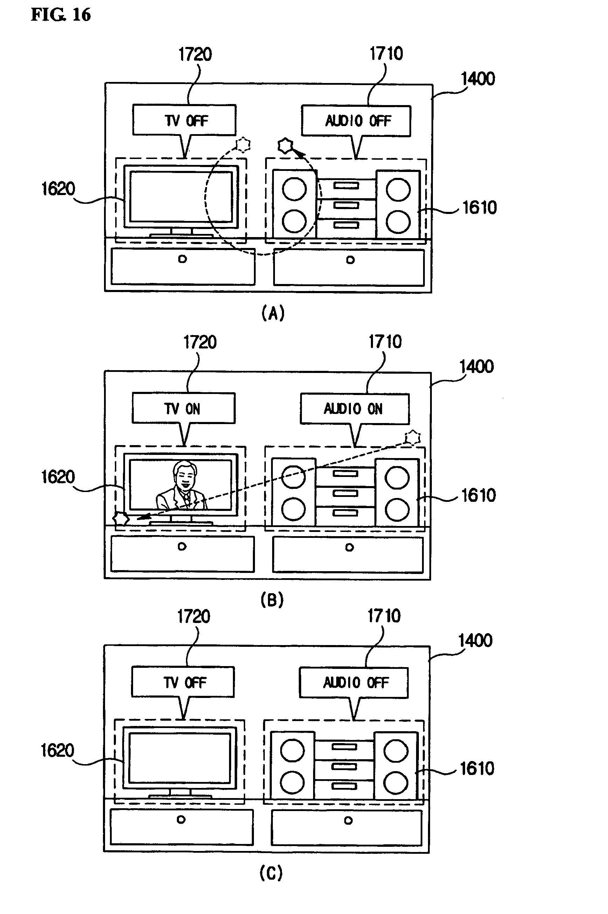

Another embodiment where the identified electronic device is controlled may now be explained, with reference to FIG. 16.

As shown in FIG. 16(A), the identified electronic devices 1610, 1620 and corresponding identification indicators 1710, 1720 may be displayed on the touch screen 1400. The identification indicators 1710, 1720 may show that the identified electronic devices 1610, 1620 turn off.

A first touch gesture having a first shape, for example, a touch and drag, may be made on the touch screen 1400. The touch gesture may be a proximity touch gesture or a contact touch gesture.

As shown in FIG. 16(B), all the identified electronic devices 1610, 1620 on the camera preview screen may turn on at a same time. In addition, the identification indicators 1710, 1720 may show that the identified electronic devices 1610, 1620 turn on.

A second touch gesture having a second shape, for example, a touch and drag, may be made on the touch screen 1400.

As shown in FIG. 16(B), all the identified electronic devices 1610, 1620 on the camera preview screen may turn off at a same time. In addition, the identification indicators 1710, 1720 show that the identified electronic devices 1610, 1620 turn off.

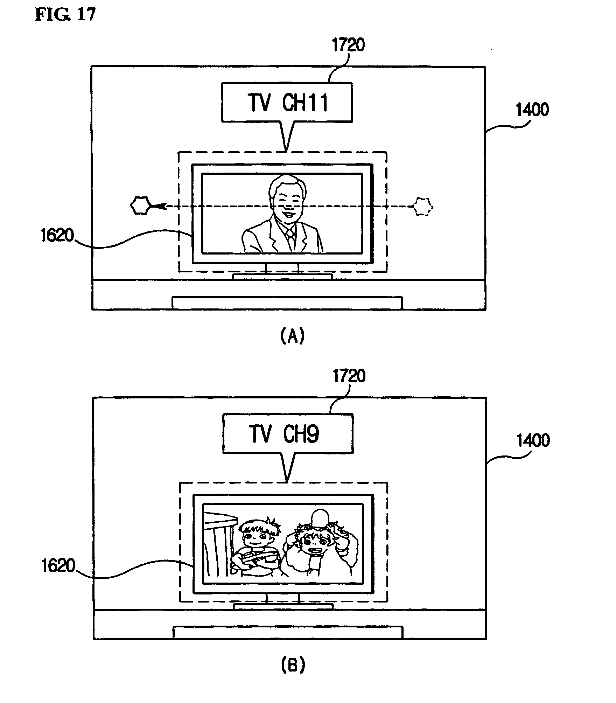

Another embodiment where the identified electronic device is controlled may now be explained with reference to FIG. 17.

As shown in FIG. 17(A), the camera preview screen may be displayed on the touch screen 1400. The TV 1620 may be identified on the camera preview screen. The corresponding identification indicator 1720 may be displayed adjacent to the TV 1620.

A third touch having a third shape may be made on the touch screen 1400.

As shown in FIG. 17(B), the mobile terminal 100 may transmit the command corresponding to the third gesture, such as change of the channel, to the TV through wireless communication. The memory 160 may store commands for the touch gestures, respectively.

Therefore, the user of the terminal may control the TV without displaying a menu window on the touch screen.

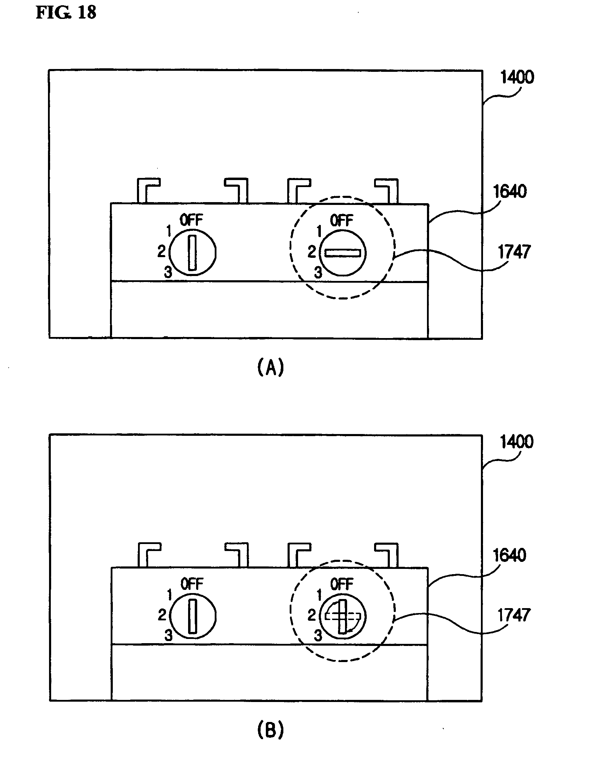

Another embodiment where the identified electronic device is controlled may now be explained with reference to FIG. 18.

The mobile terminal 100 may store an image of the single electronic device such as the range 1640 (or gas oven) in the electronic devices. The user of the mobile terminal may go out with the mobile terminal 100 storing the image on the range 1640 at any time.

As shown in FIG. 18(A), the image on the range 1640 (or gas oven) may be displayed on the touch screen 1400 whenever the user need.

The range 1640 (or gas oven) may be remotely controlled by the mobile terminal 100. Explanation on the remote-control technology may be omitted for briefness because it would be apparent for the person in the art such as home network related technology. The range's operation status may change through the remote-control, for example, ignition to extinguishing.

The controller 180 may manipulate the graphic on the range's image that is previously stored. A corresponding portion 747 of the range's image may be reflected on the operation status.

Manipulation of the graphic may be made by the augment reality technology.

In the identified electronic devices in the camera preview screen of the mobile terminal 100, the audio system 1610 may be selected. If the audio system 1610 is controlled in the camera preview screen, multimedia contents stored in the memory 160 may be transmitted to be displayed through the wireless communication, such as short range communication.

Accordingly, a user may conveniently understand a user's manual (or repair guide) of an external device through an augment reality program. Therefore, the user may easily execute a desired function.

The mobile terminal having a short cut code for moving a web page may not be limited to the above described embodiments.

Embodiments of the present invention may provide a method for displaying a manual in a mobile terminal. The method may include obtaining an image of an external device through a camera, confirming a name of the external device through a product related data that is pre-stored, and displaying a first instruction of a manual in response to the name of the external device by using an augment reality program pre-stored with the image through the camera.

Confirming the name of the external device may include displaying a candidate list of the external device, and determining the name of the external device from the candidate list.

Displaying a candidate list of the external devices may include determining whether the manual is stored by searching the memory of the mobile terminal, and downloading the manual by activating a wireless communication unit to access the Internet server when the manual is not stored in the memory.

The method may further include recognizing a user gesture in response to the first instruction of the manual, and displaying a second instruction with the image received from the camera when the user gesture is recognized.

Recognizing the user gesture in response to the first instruction of the manual may include recognizing the user gesture on the external device by using the augment reality program.

The method may also include transmitting a call signal by automatically obtaining a phone number related to the external device, based on a selection signal of a user.

The manual may include one of a user manual and a repair manual.

Embodiments of the present invention may provide a mobile terminal that includes a camera to obtain an image of an external device, a memory to store a product related data and an augment reality program, a display unit to display the image, and a controller to display a first instruction of a manual in response to the name of the external device with the image by using the product related data and the image obtained from the camera to confirm the name of the external device.

The mobile terminal may further include an user input unit to generate a user selection signal, wherein the controller to display a candidate list of the external device and determine the name of the external device from the candidate list of the generated user selection signal.

The mobile terminal may further include a wireless communication unit to access an Internet server, wherein the controller controllably determines whether the manual is stored by searching the memory of the mobile terminal and downloads the manual by activating a wireless communication unit to access the Internet server when the manual is not stored in the memory.

The controller may controllably recognize the user gesture in response to the first instruction of the manual and display a second instruction with the image received from the camera when the user gesture is recognized.

The controller may controllably recognize the user gesture on the external device by using the augment reality program.

The mobile terminal may include a wireless communication unit to transmit a call signal, wherein the controller controllably transmits a call signal by automatically obtaining a phone number related to the external device, according to a selection signal of a user.

The call signal may be a signal for any one of a voice call, a message and a video call.

A mobile terminal may include a camera configured to obtain an image of an external device, a memory configured to store a product related data and an augment reality program, a display unit configured to display the image, a wireless communication unit configured to access an Internet server, and a controller configured to confirm a name of the external device and to download a manual in response to the name of the external device through the wireless communication unit.

The memory may further store an augment reality program and the controller may controllably display a first instruction of the manual with the image received from the camera.

The controller may controllably display a second instruction of the manual when the user gesture corresponding to the first instruction of the manual is recognized.

The controller may recognize the user gesture on the external device by using an augment reality program.

The wireless communication module may transmit and receive a call signal and the controller controls that the wireless communication module transmits the call signal by automatically obtaining a phone number related to the device, when an user generates a selection signal.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal (100) comprising:
a camera (121) adapted to capture an image;
a memory (160) adapted to store the captured image;
a wireless communication unit (110) to wirelessly communicate with an external server;
a controller (180) adapted to identify the shape of an external object in the captured image and to determine whether a repair manual about the external object exists in the memory of the mobile terminal, and wherein, when the repair manual is determined to not exist in the memory, the controller is adapted to obtain the repair manual from the external server and to store the obtained repair manual in the memory; and
a display (151) adapted to display information of the repair manual stored in the memory,
in response to a user selection from the displayed information of the repair manual, the controller is adapted to:
- display a first instruction (620) of the repair manual on the display,
- display the first instruction to correspond to a displayed specific part of the external object in the captured image, wherein the displayed specific part is a part to repair of the external object, and
- display a second instruction of the repair manual when a user touches the display at an area that corresponds to the displayed first instruction or touches the display at a previously identified area.

2. The mobile terminal of claim 1, wherein the display is adapted to display a candidate list of objects, and the controller is adapted to determine the external object based on a user selection from the displayed candidate list of objects.

3. The mobile terminal of claim 1, wherein the controller is adapted to display a second instruction of the repair manual on the display based on a user input after displaying the first instruction.

4. The mobile terminal of claim 1, wherein the controller is adapted to obtain an identifier of an external source based on a user input to contact the external source.

5. The mobile terminal of claim 4, wherein the controller is adapted to automatically provide information regarding the object in a message to the external source.

6. A method of displaying on a mobile terminal (100), the method comprising:
capturing an image using the mobile terminal;
storing the captured image in a memory (160) of the mobile terminal;
identifying the shape of an external object in the captured image;
determining whether a repair manual about the external object exists in the memory of the mobile terminal;
obtaining the repair manual from an external server by wirelessly communicating, when the repair manual is determined to not exist in the memory;
storing the obtained repair manual in the memory; and
displaying information on a display (151) of the repair manual stored in the memory,
displaying a first instruction (620) from the repair manual on the display in response to a user selection from the displayed information of the repair manual, wherein the first instruction is displayed to correspond to a displayed specific part of the external object in the captured image, wherein the displayed specific part is a part to repair of the external object, and
displaying a second instruction of the repair manual when a user touches the display at an area that corresponds to the displayed first instruction or touches the display at a previously identified area.

7. The method of claim 6, further comprising displaying a candidate list of objects, and wherein identifying the external object in the captured image is based on a user selection from the displayed candidate list of objects.

8. The method of claim 6, further comprising displaying a second instruction of the repair manual on the display based on a user input after displaying the first instruction.

9. The method of claim 6, further comprising displaying a second instruction of the repair manual when a user touches the display at an area that corresponds to the displayed first instruction or touches the display at a previously identified area.

## Patentansprüche

1. Mobiles Endgerät (100), aufweisend:
eine Kamera (121), die eingerichtet ist, um ein Bild aufzunehmen;
einen Speicher (160), der eingerichtet ist, um das aufgenommene Bild zu speichern;
eine drahtlose Kommunikationseinheit (110), um drahtlos mit einem externen Server zu kommunizieren;
eine Steuereinrichtung (180), die eingerichtet ist, um die Form eines externen Objekts in dem aufgenommenen Bild zu identifizieren und zu bestimmen, ob ein Reparaturhandbuch bezüglich des externen Objekts in dem Speicher des mobilen Endgeräts vorliegt, und wobei, wenn bestimmt wird, dass das Reparaturhandbuch nicht in dem Speicher vorliegt, die Steuereinrichtung eingerichtet ist, um das Reparaturhandbuch aus dem externen Server zu erlangen und das erlangte Reparaturhandbuch in dem Speicher zu speichern; und
eine Anzeige (151), die eingerichtet ist, um Informationen des Reparaturhandbuchs anzuzeigen, das in dem Speicher gespeichert ist,
wobei, in Antwort auf eine Benutzerauswahl aus den angezeigten Informationen des Reparaturhandbuchs die Steuereinrichtung eingerichtet ist, um:
- eine erste Anweisung (620) des Reparaturhandbuchs auf der Anzeige anzuzeigen,
- die erste Anweisung anzuzeigen, um einem angezeigten spezifischen Abschnitt des externen Objekts in dem aufgenommenen Bild zu entsprechen, wobei der angezeigte spezifische Abschnitt ein Abschnitt zum Reparieren des externen Objekts ist, und
- eine zweite Anweisung des Reparaturhandbuchs anzuzeigen, wenn ein Benutzer die Anzeige bei einem Bereich berührt, der der angezeigten ersten Anweisung entspricht, oder die Anzeige bei einem zuvor identifizierten Bereich berührt.

2. Mobiles Endgerät gemäß Anspruch 1, wobei die Anzeige eingerichtet ist, um eine Kandidatenliste von Objekten anzuzeigen, und die Steuereinrichtung eingerichtet ist, um das externe Objekt auf der Grundlage einer Benutzerauswahl aus der angezeigten Kandidatenliste von Objekten zu bestimmen.

3. Mobiles Endgerät gemäß Anspruch 1, wobei die Steuereinrichtung eingerichtet ist, um eine zweite Anweisung des Reparaturhandbuchs auf der Anzeige auf der Grundlage einer Benutzereingabe nach dem Anzeigen der ersten Anweisung anzuzeigen.

4. Mobiles Endgerät gemäß Anspruch 1, wobei die Steuereinrichtung eingerichtet ist, um eine Kennung einer externen Quelle auf der Grundlage einer Benutzereingabe zu erlangen, um die externe Quelle zu kontaktieren.

5. Mobiles Endgerät gemäß Anspruch 4, wobei die Steuereinrichtung eingerichtet ist, um Informationen bezüglich des Objekts in einer Nachricht automatisch der externen Quelle bereitzustellen.

6. Verfahren zum Anzeigen auf einem mobilen Endgerät (100), wobei das Verfahren aufweist:
Aufnehmen eines Bildes unter Verwendung des mobilen Endgeräts;
Speichern des aufgenommenen Bildes in einem Speicher (160) des mobilen Endgeräts;
Identifizieren der Form eines externen Objekts in dem aufgenommenen Bild;
Bestimmen, ob ein Reparaturhandbuch bezüglich des externen Objekts in dem Speicher des mobilen Endgeräts vorliegt;
Erlangen des Reparaturhandbuchs aus einem externen Server durch drahtloses Kommunizieren, wenn bestimmt wird, dass das Reparaturhandbuch nicht in dem Speicher vorliegt;
Speichern des erlangten Reparaturhandbuchs in dem Speicher; und
Anzeigen von Informationen, auf einer Anzeige (151), des Reparaturhandbuchs, das in dem Speicher gespeichert ist,
Anzeigen einer ersten Anweisung (620) aus dem Reparaturhandbuch auf der Anzeige in Antwort auf eine Benutzerauswahl aus den angezeigten Informationen des Reparaturhandbuchs, wobei die erste Anweisung angezeigt wird, um einem angezeigten spezifischen Abschnitt des externen Objekts in dem aufgenommenen Bild zu entsprechen, wobei der angezeigte spezifische Abschnitt ein Abschnitt zum Reparieren des externen Objekts ist, und
Anzeigen einer zweiten Anweisung des Reparaturhandbuchs, wenn ein Benutzer die Anzeige bei einem Bereich berührt, der der angezeigten ersten Anweisung entspricht, oder die Anzeige bei einem zuvor identifizierten Bereich berührt.

7. Verfahren gemäß Anspruch 6, weiterhin aufweisend Anzeigen einer Kandidatenliste von Objekten, und wobei das Identifizieren des externen Objekts in dem aufgenommenen Bild auf einer Benutzerauswahl aus der angezeigten Kandidatenliste von Objekten basiert.

8. Verfahren gemäß Anspruch 6, weiterhin aufweisend Anzeigen einer zweiten Anweisung des Reparaturhandbuchs auf der Anzeige auf der Grundlage einer Benutzereingabe nach dem Anzeigen der ersten Anweisung.

9. Verfahren gemäß Anspruch 6, weiterhin aufweisend Anzeigen einer zweiten Anweisung des Reparaturhandbuchs, wenn ein Benutzer die Anzeige bei einem Bereich berührt, der der angezeigten ersten Anweisung entspricht, oder die Anzeige bei einem zuvor identifizierten Bereich berührt.

## Revendications

1. Terminal mobile (100) comprenant :
un appareil photo (121) adapté pour capturer une image ;
une mémoire (160) adaptée pour stocker l'image capturée ;
une unité de communication sans fil (110) destinée à communiquer sans fil avec un serveur externe ;
un contrôleur (180) adapté pour identifier la forme d'un objet externe dans l'image capturée et pour déterminer si un manuel de réparation se rapportant à l'objet externe se trouve dans la mémoire du terminal mobile, et dans lequel, lorsque le manuel de réparation est déterminé comme ne se trouvant pas dans la mémoire, le contrôleur est adapté pour obtenir le manuel de réparation à partir du serveur externe et pour stocker le manuel de réparation obtenu dans la mémoire ; et
un affichage (151) adapté pour afficher des informations du manuel de réparation stocké dans la mémoire,
en réponse à une sélection d'un utilisateur à partir des informations affichées du manuel de réparation, le contrôleur est adapté pour :
- afficher une première instruction (620) du manuel de réparation sur l'affichage,
- afficher la première instruction pour correspondre à une partie spécifique affichée de l'objet externe dans l'image capturée, dans lequel la partie spécifique affichée est une partie à réparer de l'objet externe, et
- afficher une deuxième instruction du manuel de réparation lorsqu'un utilisateur touche l'affichage au niveau d'une zone qui correspond à la première instruction affichée ou touche l'affichage au niveau d'une zone précédemment identifiée.

2. Terminal mobile selon la revendication 1, dans lequel l'affichage est adapté pour afficher une liste candidate d'objets, et le contrôleur est adapté pour déterminer l'objet externe sur la base d'une sélection d'un utilisateur à partir de la liste candidate d'objets affichée.

3. Terminal mobile selon la revendication 1, dans lequel le contrôleur est adapté pour afficher une deuxième instruction du manuel de réparation sur l'affichage sur la base d'une entrée d'un utilisateur après l'affichage de la première instruction.

4. Terminal mobile selon la revendication 1, dans lequel le contrôleur est adapté pour obtenir un identifiant d'une source externe sur la base d'une entrée d'un utilisateur pour contacter la source externe.

5. Terminal mobile selon la revendication 4, dans lequel le contrôleur est adapté pour délivrer automatiquement des informations se rapportant à l'objet dans un message vers la source externe.

6. Procédé d'affichage sur un terminal mobile (100), le procédé comprenant les étapes consistant à :
capturer une image en utilisant le terminal mobile ;
stocker l'image capturée dans une mémoire (160) du terminal mobile ;
identifier la forme d'un objet externe dans l'image capturée ;
déterminer si un manuel de réparation se rapportant à l'objet externe se trouve dans la mémoire du terminal mobile ;
obtenir le manuel de réparation à partir d'un serveur externe par communication sans fil, lorsque le manuel de réparation est déterminé comme ne se trouvant pas dans la mémoire ;
stocker le manuel de réparation obtenu dans la mémoire ; et
afficher des informations sur un affichage (151) du manuel de réparation stocké dans la mémoire,
afficher une première instruction (620) à partir du manuel de réparation sur l'affichage en réponse à une sélection d'un utilisateur à partir des informations affichées du manuel de réparation, dans lequel la première instruction est affichée pour correspondre à une partie spécifique affichée de l'objet externe dans l'image capturée, dans lequel la partie spécifique affichée est une partie à réparer de l'objet externe, et
afficher une deuxième instruction du manuel de réparation lorsqu'un utilisateur touche l'affichage au niveau d'une zone qui correspond à la première instruction affichée ou touche l'affichage au niveau d'une zone précédemment identifiée.

7. Procédé selon la revendication 6, comprenant en outre l'étape consistant à afficher une liste candidate d'objets, et dans lequel l'étape consistant à identifier l'objet externe dans l'image capturée est basée sur une sélection d'un utilisateur à partir de la liste candidate d'objets affichée.

8. Procédé selon la revendication 6, comprenant en outre l'étape consistant à afficher une deuxième instruction du manuel de réparation sur l'affichage sur la base d'une entrée d'un utilisateur après l'affichage de la première instruction.

9. Procédé selon la revendication 6, comprenant en outre l'étape consistant à afficher une deuxième instruction du manuel de réparation lorsqu'un utilisateur touche l'affichage au niveau d'une zone qui correspond à la première instruction affichée ou touche l'affichage au niveau d'une zone précédemment identifiée.
